# EUROPÄISCHE PATENTSCHRIFT

(11) **EP 0 516 930 B1**
(45) Veröffentlichungstag und Bekanntmachung des Hinweises auf die Patenterteilung: **18.08.1999**
(21) Anmeldenummer: 92105121.5
(22) Anmeldetag: 25.03.1992
(51) Int. Cl.: G02B 6/38, H01R 13/66

(54) **Vorrichtung zur Verbindung von Leitungen**
Apparatus for connecting conductors
Dispositif pour connecter des conduites

(30) Priorität: 03.06.1991 DE 4118096
(43) Veröffentlichungstag der Anmeldung: 09.12.1992
(73) Patentinhaber: DaimlerChrysler Aerospace Airbus Gesellschaft mit beschränkter Haftung, 21129 Hamburg (DE)
(72) Erfinder: Kirma, Safa, W-2000 Wedel/Holstein (DE)
(74) Vertreter: Hansmann, Dierk, Dipl.-Ing.

(56) Entgegenhaltungen:
- EP-A- 0 164 993
- DE-A- 3 914 978
- US-A- 4 896 939

## Beschreibung

Die Erfindung betrifft eine Vorrichtung zur Verbindung von Leitungen mit mindestens zwei separaten Übertragungskanälen, bestehend aus elektrischen und optischen Leitern, bei der im Bereich eines Verbindungsgehäuses eine optische Kupplung zur Verbindung von im Bereich von jedem der Leitungen angeordneten optischen Leitern sowie eine elektrische Kupplung zur Verbindung von ebenfalls im Bereich von jedem der Leitungen angeordneten elektrischen Leitern vorgesehen ist und bei der sich die elektrische Kupplung bereichsweise koaxial zur optischen Kupplung erstreckt und bei der die elektrische Kupplung die optische Kupplung bereichsweise umschließt.

Es sind Steckverbindungen bekannt, die eine elektrisch leitfähige Verbindung zwischen elektrischen Leitungen ermöglichen. Weiterhin ist es bekannt, eine visuelle Übertragungen zulassende Verbindung zwischen optischen Leitern herzustellen. Insbesondere bei der Verwendung von optischen Leitern, beispielsweise Glasfaserkabeln, besteht jedoch ein erhebliches Problem darin, eine ausreichende mechanische Widerstandsfähigkeit der Leitungen zu gewährleisten. Eine derartige Gewährleistung ist insbesondere bei einer Verwendung im Bereich von sicherheitsrelevanten Einrichtungen, beispielsweise Computern, Nachrichten- und Kommunikationseinrichtungen, Einrichtungen der Flugzeugtechnik sowie rechnergesteuerten Maschinen erforderlich. Bei optischen Leitern führen selbst geringe Zugbelastungen bei einer genügend langen Einwirkungsdauer zu einem Auftreten von Mikrokerben, die einen Faserbruch zur Folge haben können. Bei einem Überschreiten von maximalen Biegungs winkeln ist es darüber hinaus möglich, daß ein vorgegebener Grenzwinkel für auftreffende Lichtstrahlung, der eine Totalreflexion gewährleistet, überschritten wird und hieraus ein Austritt von Lichtstrahlung aus der Faser resultiert. Dieser Austritt von Lichtstrahlung führt zu einer Verminderung der Lichtstärke und damit zu einer Erhöhung der Dämpfung. Neben den Zugbelastungen und den Durchbiegungen sind jedoch auch andere mechanische Beanspruchungen, beispielsweise Biegungs- und Torsionsbeanspruchungen, nachteilig.

Zur Gewährleistung von hohen Datenübertragungsraten ist jedoch die Verwendung von optischen Leitern bei einer Vielzahl von Anwendungen unerläßlich. Die nach dem Stand der Technik bekannten Nachteile der Verwendung von optischen Leitern können durch die Konstruktion eines speziellen Kabels behoben werden, bei dem mindestens ein optischer Leiter von mindestens einem elektrischen Leiter im wesentlichen koaxial umschlossen wird. Für derartige Kabel sind jedoch keine Vorrichtungen bekannt, die eine einfache und dennoch zuverlässige Verbindung von Kabelsegmenten ermöglichen.

Aus der DE-A-39 14 978 ist eine Steckverbindung für Lichtwellenleiter bekannt. Die Steckverbindung für die Lichtwellenleiter ist in einer mehrpoligen elektrischen Steckverbindung integriert. Der Lichtwellenleiter ist dabei in einem zentralen Bereich der Steckverbindung angeordnet und Steckkontakte der einzelnen elektrischen Adern umgeben die optische Steckverbindung satellitenförmig. Die elektrischen Steckverbindungen sind somit auf einer Kreisbahn um die optische Steckverbindung herum angeordnet.

Die US-A-4 896 939 zeigt eine weitere Steckverbindung, bei der sowohl optische als auch elektrische Übertragungskanäle miteinander verbunden werden. Der elektrische Leiter ist koaxial zum optischen Leiter angeordnet und umgibt diesen. Es liegt eine sehr massive Ausbildung vor, die für eine Verwendung im Bereich der Verlegung von Unterwasserkabeln geeignet ist. Es sind ebenfalls mehrere koaxial angeordnete elektrische Leiter beschrieben. Es wird eine starre Konstruktion bereitgestellt, die im wesentlichen für langgestreckte lineare Verlegungen geeignet ist. Eine Anwendung in räumlich beengten Bereichen erscheint nicht möglich.

Die EP-A-164 993 zeigt ebenfalls eine Steckverbindung für elektrische und optische Leiter. Koaxial zu Verbindungshülsen zur Durchführung der elektrischen Verbindung sind die optischen Leiter angeordnet. Die gegeneinander zu führenden optischen Leiter sind in Endstücke eingelassen, die federnd gegeneinander verspannt sind.

Aus der FR-A-2 569 279 ist ein Stecker für optische Leitungen bekannt. Die optische Leitung erstreckt sich durch einen Stift hindurch, der in ein Aufnahmemodul einsetzbar und dort arretierbar ist. Die Durchführung von elektrischen Verbindungen ist nicht vorgesehen.

Aufgabe der vorliegenden Erfindung ist es, eine Vorrichtung der einleitend genannten Art zu schaffen, die eine Verbindung von mechanisch stabilisierten optischen Leitern ermöglicht.

Diese Aufgabe wird erfindungsgemäß durch die im Anspruch 1 definierte Vorrichtung gelöst.

Die Kombination aus der optischen Kupplung und der elektrischen Kupplung ermöglicht es, mit Hilfe von elektrischen Leitern stabilisierte Lichtleiter, insbesondere aus Glasfasern oder Fasern aus Kunststoff ausgebildete Lichtleiter, miteinander zu verbinden, die zur Erhöhung ihrer Stabilität von elektrischen Leitern umschlossen sind. Hieraus resultiert, daß beim Ausfall des Lichtwellenleiters die Datenübertragung vom elektrischen Leiter übernommen werden kann. Bei einer Ausbildung der elektrischen Kupplung derart, daß sie einen Anschluß von einem elektrischen Leiter zuläßt, der als ein Metallgeflecht ausgebildet ist, ist es möglich, flexible Kabel miteinander zu verbinden, die dennoch eine hohe Stabilität aufweisen. Die Kombination der optischen Kupplung und der elektrischen Kupplung ermöglicht darüber hinaus eine kompakte Ausführung, die vor allem bei einer Verwendung der Vorrichtung im Bereich der Luft- und Raumfahrt lediglich ein geringes Montagevolumen beansprucht und die Zugänglichkeit erhöht.

Die optischen und elektrischen Leiter sind an einem einzigen Kontakt koaxial verbunden.

Eine besonders kompakte Anordnung wird dadurch realisiert, daß sich die elektrische Kupplung bereichsweise koaxial zur optischen Kupplung erstreckt.

Eine einfache Handhabung der Vorrichtung wird dadurch gewährleistet, daß die elektrische Kupplung bereichsweise stiftförmig ausgebildet und aus einem elektrisch leitfähigen Material konstruiert ist.

Zur Ermöglichung einer Kombination von mechanischer Stabilität und ausreichender Flexibilität ist vorgesehen, daß die elektrische Kupplung bereichsweise als ein Stiftstecker ausgebildet ist, der im Bereich einer Wandung mit einem als Metallgeflecht ausgebildeten elektrischen Leiter verbindbar ist.

Ein einfaches Einsetzen des Kabels in den Bereich der Kupplungen wird dadurch ermöglicht, daß im Bereich einer dem Kabel zugewandten Ausdehnung des Stiftsteckers eine von diesem bereichsweise aufgenommene Stützhülse angeordnet ist, die zur Verspannung des elektrischen Leiters gegenüber dem Stiftstecker vorgesehen ist.

Zur Ermöglichung einer einfachen und zuverlässigen elektrischen Verbindung zwischen dem elektrischen Leiter und der elektrischen Kupplung wird vorgeschlagen, daß die Stützhülse längsverschieblich im Bereich des Steckers angeordnet ist.

Eine mechanisch vergleichsweise einfache Realisierung kann dadurch gewährleistet werden, daß die elektrische Kupplung im wesentlichen aus einem Stiftstecker und einem den Stiftstecker bereichsweise aufnehmenden Buchsenstecker ausgebildet ist und sowohl innerhalb des Stiftsteckers als auch innerhalb des Buchsensteckers ein optischer Leiter geführt ist.

Es ist aber auch möglich, zur Ermöglichung der Verwendung von universellen Bauelementen vorzusehen, daß zwei in Richtung einer Kontaktlängsachse hintereinander angeordnete Stiftstecker vorgesehen sind, die elektrisch von einer Verbindungshülse miteinander verbunden sind.

Eine besonders kompakte Anordnung kann dadurch realisiert werden, daß sowohl die erste Leitung als auch die zweite Leitung mit jeweils einem Stiftstecker verbunden sind und die Stiftstecker zur Ausbildung eines Verbindungsmodules paarweise nebeneinander angeordnet sind.

Bei einer kompakten Ausführungsform kann eine Realisierung der elektrischen Kupplung dadurch erfolgen, daß die optische Kupplung im wesentlichen als ein Prisma ausgebildet ist, das über einen Lichtweg die Steckerenden der Stiftstecker miteinander verbindet.

Zur Gewährleistung einer ausreichenden Verbindungssicherheit wird vorgeschlagen, daß zur Sicherung der Stecker im Bereich des Gehäuses eine Sicherungseinrichtung vorgesehen ist, die im wesentlichen aus einer am Stecker angeformten Verdickung ausgebildet ist, die von Ausnehmungen im Bereich von Gehäusebuchsen aufnehmbar ist.

Eine schnelle Durchführung von Montagearbeiten und eine Anordnung auf einem geringen Montagevolumen, insbesondere bei Verwendungen im Bereich der Luft- und Raumfahrt, wird dadurch ermöglicht, daß das Gehäuse eine zur Aufnahme von einer Montageschiene geeignete Formgebung aufweist.

Es zeigen:
- Fig. 1: eine Draufsicht auf eine modulförmig ausgebildete Vorrichtung zur paarweisen Verbindung von Kabeln,
- Fig. 2: einen Querschnitt gemäß Schnittlinie II-II in Figur 1,
- Fig. 3: eine teilweise geschnittene Darstellung einer mit einem Gehäuse versehenen Vorrichtung, bei der das Gehäuse im Bereich einer Montage schiene angeordnet ist und die Kupplung aus einer Buchse und einem von der Buchse aufgenommenen Stift ausgebildet ist,
- Fig. 4: eine vergrößerte Darstellung der Einzelheit IV gemäß Figur 3,
- Fig. 5: eine vergrößerte Darstellung der Einzelheit V in Figur 3,
- Fig. 6: eine teilweise geschnittene Darstellung einer anderen Vorrichtung, bei der jedem der Kabel zugeordnete Stecker von einer diese bereichsweise umschließenden elektrisch leitfähigen Buchse aufgenommen sind,
- Fig. 7: eine vergrößerte Darstellung der Einzelheit VII gemäß Figur 6,
- Fig. 8: eine abgewandelte Ausführungsform entsprechend der Darstellung in Figur 5 **und**
- Fig. 9: eine weitere abgewandelte Darstellung entsprechend Figur 5.

Eine Vorrichtung zur Verbindung von zwei Leitungen (1,2) besteht im wesentlichen aus einer optischen Kupplung (3) und einer elektrischen Kupplung (4), die in einem Gehäuse (5) angeordnet sind.

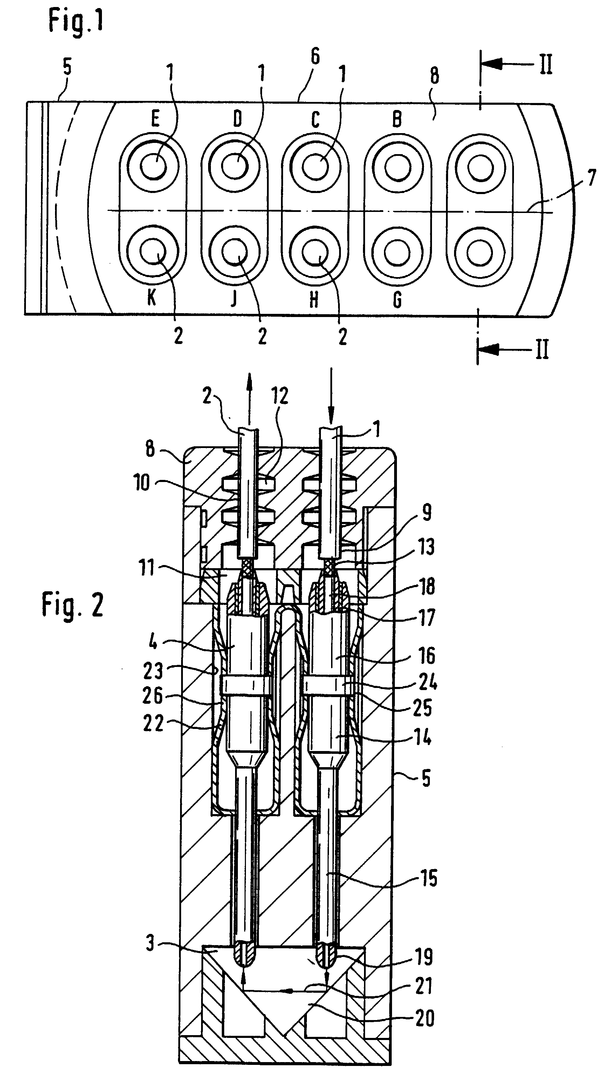

Figur 1 zeigt eine Draufsicht auf eine als Verbindungsmodul (6) ausgebildete erfindungsgemäße Vorrichtung. Die Leitungen (1,2) werden jeweils paarweise und im wesentlichen symmetrisch zu einer Gehäuselängsachse (7) in den Bereich eines Gehäusedeckels (8) geführt.

In Figur 2 ist erfindungsgemäß dargestellt, daß die jeweils mit einem Mantel (9) versehenen Leitungen (1,2) über im Bereich des Gehäusedeckels (8) angeordnete Durchlässe (10) in den Bereich eines Gehäuseinnenraumes (11) geführt sind. Zur Gewährleistung einer ausreichenden Elastizität sind im Bereich der Durchlässe (10) Erweiterungen (12) angeordnet . Die Leitungen (1,2) weisen elektrische Leiter (13) auf, die elektrisch leitfähig mit der elektrischen Kupplung (4) verbunden sind. Die elektrische Kupplung (4) besteht im wesentlichen aus einem Stecker (14), der aus einem stiftförmigen Endstück (15) sowie einem im wesentlichen hohlzylindrischen Aufnahmelement (16) ausgebildet ist. Zwischen einer in das Aufnahmeelement (16) eingeführten Stützhülse (17) und dem Aufnahmeelement (16) ist der beispielsweise als Metallgeflecht ausgebildete Leiter (13) geführt. Die Stützhülse (17) ist den elektrischen Leiter (13) gegen das Aufnahmeelement (16) drückend gegenüber dem Aufnahmeelement (16) verspannt. Ein optischer Leiter (18) der Leitungen (1,2), der beispielsweise als eine Glasfaser oder eine Faser aus Kunststoff ausgebildet ist, ist durch das hohlzylindrische Aufnahmeelement (16) und das stiftförmige Endstück (15) hindurch bis in den Bereich eines Steckerendes (19) geführt. Sowohl der mit der Leitung (1) verbundene Stecker (14) als auch der mit der Leitung (2) verbundene Stecker (14) münden im Bereich ihrer Steckerenden (19) in ein Prisma (20) ein, das beispielsweise als ein Dachkantprisma ausgebildet ist. Das Prisma (20) weist im Bereich von Seitenflächen totalreflektierende Eigenschaften auf und stellt einen die Steckerenden (19) miteinander verbindenden Lichtweg (21) bereit.

Die Stecker (14) sind elektrisch über Gehäusebuchsen (22) miteinander verbunden, die vorzugsweise als einheitliches Bauelement ausgebildet und innerhalb von Montageausnehmungen (23) angeordnet sind, die den Gehäuseinnenraum (11) im wesentlichen ausbilden. Zur Sicherung der Stecker (14) gegen ein unbeabsichtigtes Verrutschen sind die hohlzylindrischen Aufnahmeelemente (16) im Bereich ihrer äußeren Begrenzung mit einer Verdickung (24) versehen, die von Ausnehmungen (25) im Bereich der Gehäusebuchsen (22) aufnehmbar sind. Zur Erleichterung einer Einführung der Verdickungen (24) in die Ausnehmungen (25) sind Seitenbereiche (26) der Gehäusebuchsen (22) elastisch federnd ausgebildet. Die optische Kupplung (3) wird im wesentlichen durch das die stiftförmigen Endstücke (15) aufnehmende Prisma (20) ausgebildet.

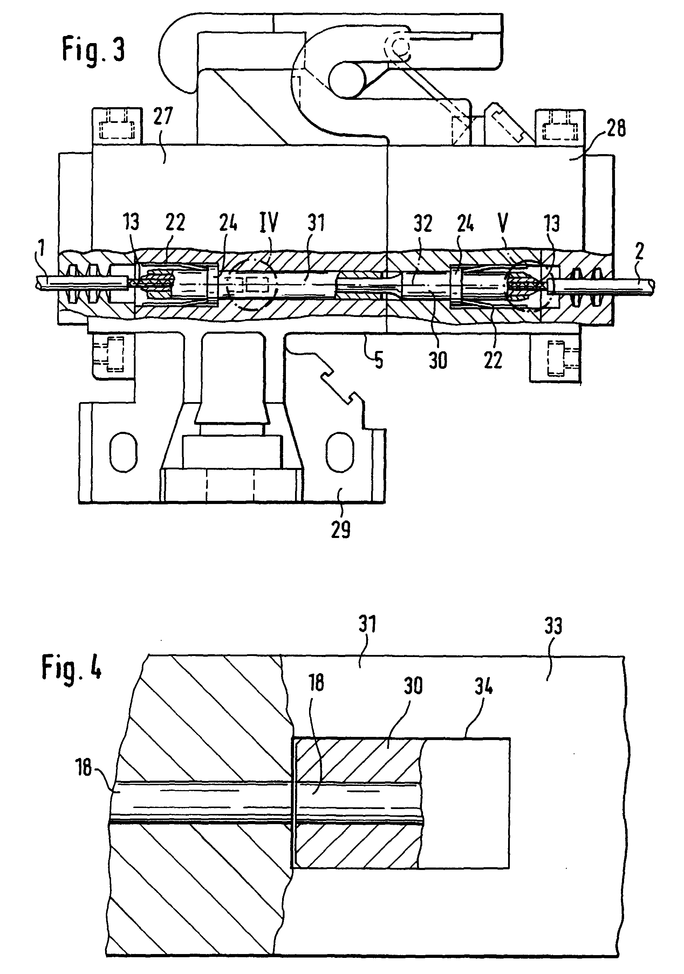

Bei der Vorrichtung gemäß Figur 3 ist das Gehäuse (5) aus einem Gehäusehauptteil (27) und einem lösbar mit dem Gehäusehauptteil (27) verbundenen Ansatzelement (28) ausgebildet. Die Leitung (1) ist in das im Bereich einer Montageschiene (29) angeordnete Gehäusehauptteil (27) eingeführt. Es sind separate Gehäusebuchsen (22) vorgesehen, die jeweils in Montageausnehmungen (23) angeordnet sind. Das mit der Leitung (2) verbundene Element der elektrischen Kupplung (4) ist als ein Stiftstecker (30) und das mit der Leitung (1) verbundene Element als ein Buchsenstecker (31) ausgebildet , der den Stiftstecker (30) bereichsweise aufnimmt. Der Stiftstecker (30) und der Buchsenstecker (31) erstrecken sich im wesentlichen entlang einer Kontaktlängsachse (32). Sowohl der Buchsenstecker (31) als auch der Stiftstecker (30) sind mit Verdickungen (24) versehen, die im Bereich der Gehäusebuchsen (22) fixiert werden.

Aus der vergrößerten Darstellung in Figur 4 ist ersichtlich, daß die optischen Leiter (18) im Bereich des Stiftsteckers (30) und des Buchsensteckers (31) mit einem geringen Abstand gegeneinander geführt werden. Eine elektrisch leitfähige Kontakthülse (33) des Buchsensteckers (31) ist mit einem Sichtfenster (34) versehen, das ein Schneiden und ein Überarbeiten des optischen Leiters (18) nach einem Einsetzen in den Buchsenstecker (31) ermöglicht.

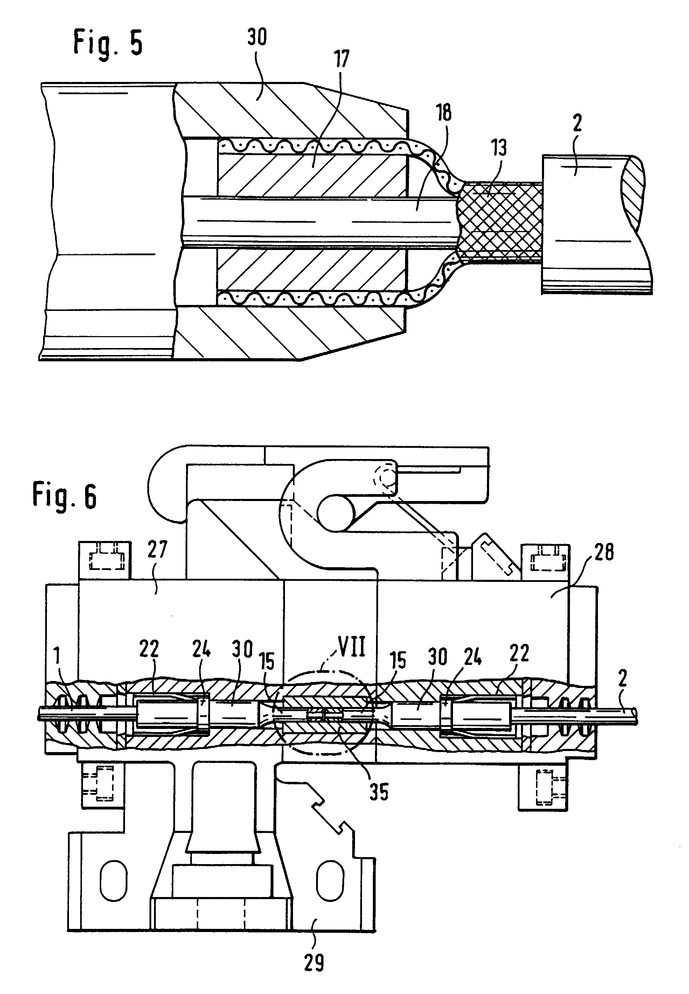

Aus der Darstellung in Figur 5 ist ersichtlich, wie der elektrische Leiter (13) mit der elektrischen Kupplung (4) verbunden ist. Zur Fixierung des elektrischen Leiters (13) ist die Stützhülse (17) vorgesehen, die den elektrischen Leiter (13), der als ein Metallgeflecht ausgebildet ist, zwischen sich und einer Wandung des Stiftsteckers (30) einschießt. Der optische Leiter (18) ist durch die Stützhülse (17) hindurchgeführt.

Bei der Vorrichtung gemäß Figur 6 ist sowohl das Kabel (1) als auch das Kabel (2) mit einem Stiftstecker (30) verbunden und jeder der Stiftstecker (30) ist mit seinem stiftförmigen Endstück (15) in eine Verbindungshülse (35) geführt, die elektrisch leitfähig ausgebildet ist.

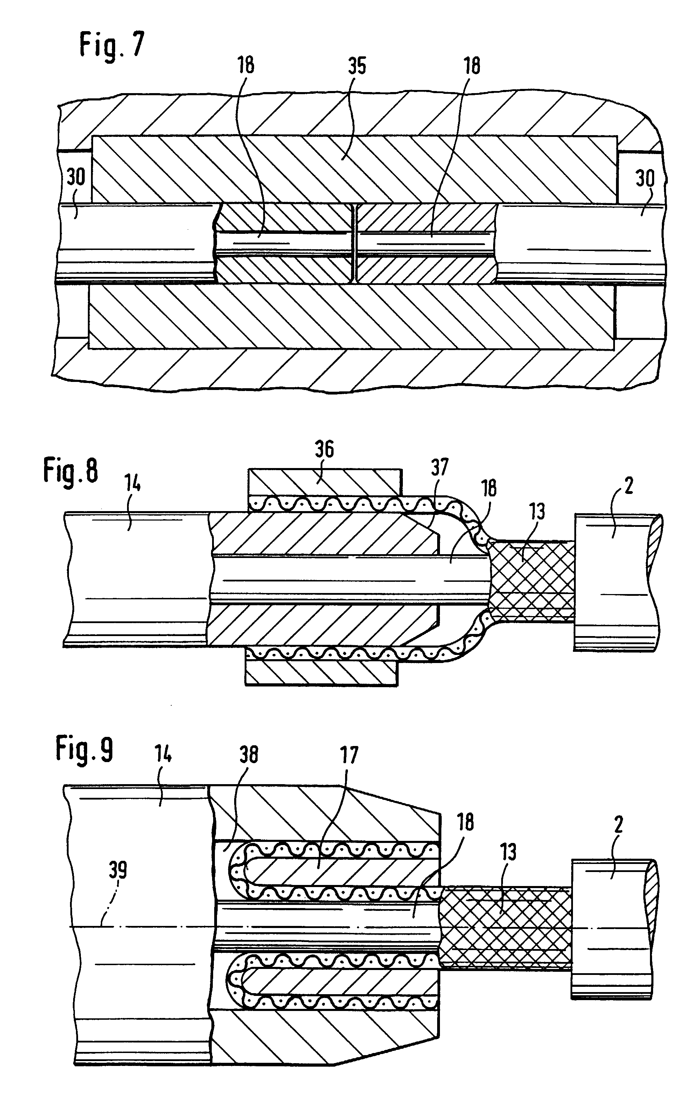

Eine vergrößerte Darstellung der Verbindung der Stiftstecker (30) im Bereich der Verbindungshülse (35) ist in Figur 7 dargestellt. Die Enden der Stiftstecker (30) grenzen unmittelbar aneinander und ermöglichen so einen verlustarmen Übertritt optischer Signale von einem optischen Leiter (18) zum anderen optischen Leiter (18).

In den Figuren 8 und 9 sind andere Möglichkeiten zur elektrischen Verbindung des elektrischen Leiters (13) mit der elektrischen Kupplung (4) dargestellt. Bei der Ausführungsform gemäß Figur 8 ist der elektrische Leiter (13) den Stecker (14) umgebend angeordnet und wird von einer Quetschhülse (36) gegenüber diesem verspannt. Die Quetschhülse (36) erstreckt sich dabei im wesentlichen radial zum Stecker (14). Zur Erleichterung eines Aufschiebens des elektrischen Leiters (13) auf den Stecker (14) ist dieser mit einer Anschrägung (37) versehen.

Bei der Vorrichtung gemäß Figur 9 ist eine Stützhülse (17) vorgesehen, die in eine Ausnehmung (38) im. Bereich des Steckers (14) eingesetzt ist. Die Stützhülse (17) weist dabei eine Dimensionierung auf, die sowohl einen Abstand zum optischen Leiter (18) als auch einen Abstand zur Wandung des Steckers (14) gewährleistet. Hierdurch ist es möglich, den als Metallgeflecht ausgebildeten elektrischen Leiter (13) zwischen den optischen Leiter (18) und die Stützhülse (17) zu führen und im Bereich einer in Einsatzrichtung nach innen weisenden Begrenzungsfläche derart umzulegen, daß sich das Metallgeflecht des elektrischen Leiters (13) auch zwischen der Stützhülse (17) und der Wandung des Steckers (14) erstreckt. Hierdurch ist der elektrische Leiter (13) um die Stützhülse (17) herumgestülpt und wird von dieser bei einer geeigneten Dimensionierung gegen die Wandung des Steckers (14) gedrückt. Die Ausnehmung (38) kann insbesondere als eine radial zur Steckerlängsachse (39) ausgerichtete Bohrung ausgebildet sein.

Die Dimensionierung der Stiftstecker (30) und der Buchsenstecker (31) kann derart gewählt werden, daß diese von standardisierten Gehäusekammern aufnehmbar sind.

Zur Gewährleistung einer exakten Positionierung des optischen Leiters (18) im Bereich des Stiftsteckers (30) und des Buchsensteckers (31) werden den optischen Leiter (13) aufnehmende Präzisionsbohrungen vorgesehen. Nach einer Einführung des optischen Leiters (13) in die Präzisionsbohrung wird der optische Leiter vorzugsweise so weit eingeschoben, daß er im Bereich der Steckerenden (19) aus dem Stecker (14,30,31) herausragt. Das herausragende Faserende kann mit einem Ritz- bzw. Schneidwerkzeug abgetrennt werden. Anschließend kann eine Feinbearbeitung erfolgen, um geeignete Oberflächenstrukturen im Bereich der Endfläche des optischen Leiters (18) zu erzielen. Zur Ermöglichung einer Bearbeitung des optischen Leiters (18) im Bereich eines Buchsensteckers (31) weist dieser das Sichtfenster (34) auf, durch das die Bearbeitungswerkzeuge in dem Bereich des optischen Leiters (18) geführt werden können.

## Patentansprüche

1. **Vorrichtung zur Verbindung von zwei Kabeln** (1,2), von denen jedes mindestens einen optischen Leiter (18), der zumindest von einem als Metallgeflecht ausgebildeten elektrischen Leiter (13) im wesentlichen koaxial umschlossen ist, besitzt, wobei die Vorrichtung folgende Merkmale aufweist:
ein Verbindungsgehäuse (5), das zwei nebeneinanderliegende elektrisch leitfähige und elektrisch miteinander verbundene Gehäusebuchsen (22) aufweist;
zwei elektrisch leitfähige Stecker (14), von denen jeder aus einem im wesentlichen koaxial hohlzylindrischen Aufnahmeelement (16), dem ein stiftförmiges Endstück (15), das in ein Steckerende (19) mündet, nachgeordnet ist, besteht, die im Bereich einer Wandung mit dem Metallgeflecht des entsprechenden Kabels elektrisch leitend verbindbar sind und bei denen der optische Leiter (18) des entsprechenden Kabels jeweils durch das Aufnahmeelement (16) und das Endstück (15) bis in den Bereich des Steckerendes (19) geführt ist, wobei die zwei Stecker in die Gehäusebuchsen einsteckbar sind;
und ein Dachkantenprisma (20), das am Ende der zwei Gehäusebuchsen angeordnet ist, so daß in dessen Grundfläche die Steckerenden (19) einmünden, das im Bereich von Seitenflächen totalreflektierende Eigenschaften aufweist und das so ausgebildet ist, daß es einen Lichtweg (21) bereitstellt, der die Steckerenden (19) optisch miteinander verbindet.

## Claims

1. **Device for connecting two cables** (1, 2), each of which has at least one optical fibre (18), which is enclosed substantially coaxially at least by one electric conductor (13) in the form of a metal braid, wherein the device comprises the following features:
a connection housing (5), which comprises two adjacent, electrically conductive housing sockets (22) which are electrically connected to one another;
two electrically conductive connectors (14), each of which comprises a substantially coaxially hollow-cylindrical receiving element (16) having disposed downstream thereof a pin-shaped end piece (15) opening into a connector end (19) and which in the region of a wall are connectable in an electrically conductive manner to the metal braid of the appropriate cable and in which the optical fibre (18) of the appropriate cable runs in each case through the receiving element (16) and the end piece (15) as far as into the region of the connector end (19), wherein the two connectors are insertable into the housing sockets;
and a ridge prism (20) which is disposed at the end of the two housing sockets, so that the connector ends (19) open into the base surface of said ridge prism, which in the region of lateral surfaces presents total reflection properties and which is designed so as to provide a light path (21), which connects the connector ends (19) optically to one another.

## Revendications

1. Dispositif destiné à la connexion de deux câbles (1, 2), chacun de ceux-ci étant constitué d'au moins un conducteur optique (18) entouré de manière sensiblement coaxiale par au moins un conducteur électrique (13) ayant la forme d'un treillis métallique, le dispositif présentant les caractéristiques suivantes :
une boîte de connexion (5) comportant deux douilles (22) juxtaposées conductrices de l'électricité et reliées électriquement l'une à l'autre;
deux fiches (14) conductrices de l'électricité, chacune constituée d'un élément de réception (16) sensiblement coaxial et présentant la forme d'un cylindre creux, auquel est adjointe une pièce d'extrémité (15) en forme de tige qui débouche dans une extrémité de fiche, ces deux fiches pouvant être reliées, dans la zone d'une paroi et de manière à conduire l'électricité, au treillis métallique du câble correspondant et le conducteur optique (18) du câble correspondant pouvant être guidé au travers de l'élément de réception (16) et de la pièce d'extrémité (15) jusque dans la zone de l'extrémité de fiche (19), les deux fiches pouvant être enfichées dans les douilles (22);
et un prisme triangulaire (20) qui est disposé à l'extrémité des deux douilles, de telle sorte que les extrémités de fiches (19) débouchent dans la base de ce prisme triangulaire, qui présente des propriétés de réflexion totale dans la zone des surfaces latérales et qui est conçu de façon à former un trajet optique (21) qui relie optiquement les extrémités de fiches les unes aux autres.
